# EUROPEAN PATENT SPECIFICATION

(11) **EP 2 172 917 B1**
(45) Date of publication and mention of the grant of the patent: **30.09.2015**
(21) Application number: 09004918.0
(22) Date of filing: 02.04.2009
(51) Int. Cl.: G08B 21/06, G08B 25/01, G08B 25/08, G08B 25/10, G08B 25/14, B60K 28/00

(54) **Telematics terminal and method for notifing emergency conditions using the same**
Telematisches Endgerät und Verfahren zur Mitteilung von Notfallsituationen damit
Terminal télématique et procédé de notification de conditions d'urgence l'utilisant

(30) Priority: 06.10.2008 KR 20080097751
(43) Date of publication of application: 07.04.2010
(73) Proprietor: LG Electronics Inc., Yeongdeungpo-gu Seoul 150-721 (KR)
(72) Inventor: Do, In-Young, Seocho-Gu Seoul (KR)
(74) Representative: Ter Meer Steinmeister & Partner

(56) References cited:
- US-A- 5 630 209
- US-A1- 2005 099 273
- US-A1- 2005 185 052
- US-A1- 2005 275 549
- US-B1- 6 741 165

## Description

### BACKGROUND OF THE INVENTION

### 1. Field of the Invention

The present invention relates to a telematics terminal and a method for notifying emergency conditions using the same.

### 2. Background of the Invention

The term of telematics is combined words of Telecommunications and Informatics, and is also known as Information and Communications Technology (ICT). More specifically, it is the science of sending, receiving and storing information via telecommunication devices.

More recently, telematics have been applied specifically to the use of Global Positioning System (GPS) technology integrated with computers and mobile communications technology in automotive navigation systems.

The vehicle telematics may be applied to various fields such as remote diagnostics for vehicles, problems diagnostics for in-vehicle electric/mechanical components, vehicle controls, communications between a call center and a vehicle or between vehicles equipped with telematics terminals, intelligent transportation systems, and an interface between a user and a vehicle.

There have been required methods for notifying emergency conditions occurring from a vehicle equipped with a telematics terminal, or a vehicle passenger.

US 2005/0185052 A1 discloses a video recording system comprising means for sensing when a vehicular collision occurs, a video camera, means for storing and triggering means coupling the means for sensing and the video camera, wherein when the means for sensing are actuated the video camera is activated.

### SUMMARY OF THE INVENTION

Therefore, one object of the present invention is to provide a telematics terminal capable of effectively providing visual information relating to emergency conditions to a server in the occurrence of abnormal events.

Another object of the present invention is to provide a telematics terminal capable of enhancing a user's privacy protection function by selectively transmitting visual information relating to emergency conditions to a server in the occurrence of abnormal events.

The object is solved by the features of the independent claims. To achieve these and other advantages and in accordance with the purpose of the present invention, as embodied and broadly described herein, there is preferably provided a method for notifying emergency conditions by a telematics terminal, comprising: determining whether to activate a camera by sensing occurrence of abnormal events; activating the camera based on a result of the determination; and transmitting images captured by the camera to a server.

The method may further comprise transmitting audio signals received through a microphone to the server in the occurrence of the abnormal events.

The method may further comprise the determining whether to activate a camera comprises determining whether camera activating events have occurred or not, and
wherein the activating the camera is performed in the occurrence of the camera activating events.

The camera activating events preferably comprise at least one of reception of a signal indicating image capturing by the camera from the server, no reception of normal event input within a predetermined time, and a passenger's authorization for image capturing by the camera.

The step of activating the camera, the camera is preferably activated under a state that transmission of signals indicating activation of the camera to outside is minimized.

The step of activating the camera is preferably performed when a user inputs a signal to authorize image capturing by the camera.

To achieve these and other advantages and in accordance with the purpose of the present invention, as embodied and broadly described herein, there is preferably provided a telematics terminal comprising a sensing means configured to sense occurrence of abnormal events or camera activating events; a controller configured to determine occurrence of abnormal events by using the sensing means, and to activate a camera in response to abnormal events sensed by a sensing means; a camera configured to be activated by the controller; and a wireless communication unit configured to transmit images captured by the camera to a server.

The controller is preferably configured to activate a camera according to whether the camera activating events have occurred in the occurrence of the abnormal events.

The abnormal events comprise preferably at least one of the following: crash with an object; problems of components mounted to a vehicle; falling of a vehicle; a third party's intrusion into a vehicle; a vehicle theft; and a passenger's physical abnormality.

The sensing means preferably comprise at least one of the following: a crash sensor to sense crash of a vehicle with an object; a user input unit to sense occurrence of abnormal events based on a passenger's input; a sensor to sense damages of components; a position information module; a wireless communication unit; a speed sensor; a door sensor; a microphone; a camera; and a temperature sensor.

The camera activating events preferably comprise at least one of the following: sensing abnormal manipulations for a vehicle door; staying at a preset crime-ridden district for more than a predetermined time for a vehicle; receiving a signal indicating image capturing by the camera from the server; absence of inputting a passenger's voice included in the received audio signals within a predetermined time; sensing of a passenger's input through the user input unit indicating authorization for image capturing by the camera; absence of sensing a passenger's input through the user input unit within a predetermined time; sensing a third party's voice rather than a passenger's voice among the received audio signals; exceeding a preset value of a crash amount sensed by the crash sensor when a vehicle collides with an object; and exceeding a preset value of a speed of a vehicle sensed before crash with an object by a speed sensor.

The microphone, the camera, and the temperature sensor preferably sense a passenger's vital reaction, and the controller determines whether abnormal events have occurred based on the sensed passenger's vital reaction.

The telematics terminal may further comprises a microphone to generate audio signals by sensing interior or exterior sound of a vehicle in the occurrence of abnormal events, and wherein the wireless communication unit transmits audio signals to the server.

The camera is preferably activated under a state that transmission of signals indicating activation of the camera to outside is minimized.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram showing a telematics terminal according to one embodiment of the present invention;
FIG. 2 is a flowchart showing a method for notifying emergency conditions by a telematics terminal according to one embodiment of the present invention;
FIG. 3 is a flowchart showing a method for notifying emergency conditions by a telematics terminal according to another embodiment of the present invention;
Fig. 4 is a flowchart showing a method for notifying emergency conditions by a telematics terminal according to still another embodiment of the present invention;
FIG. 5 is a view to explain a mounting position for a camera of the telematics terminal;
FIG. 6 is a view to explain a mounting position for a user input unit; and
FIGS. 7 and 8 are views respectively showing a method for determining whether camera activating events have occurred based on audio signals sensed by a microphone.

### DETAILED DESCRIPTION OF THE INVENTION

Description will now be given in detail of the present invention, with reference to the accompanying drawings.

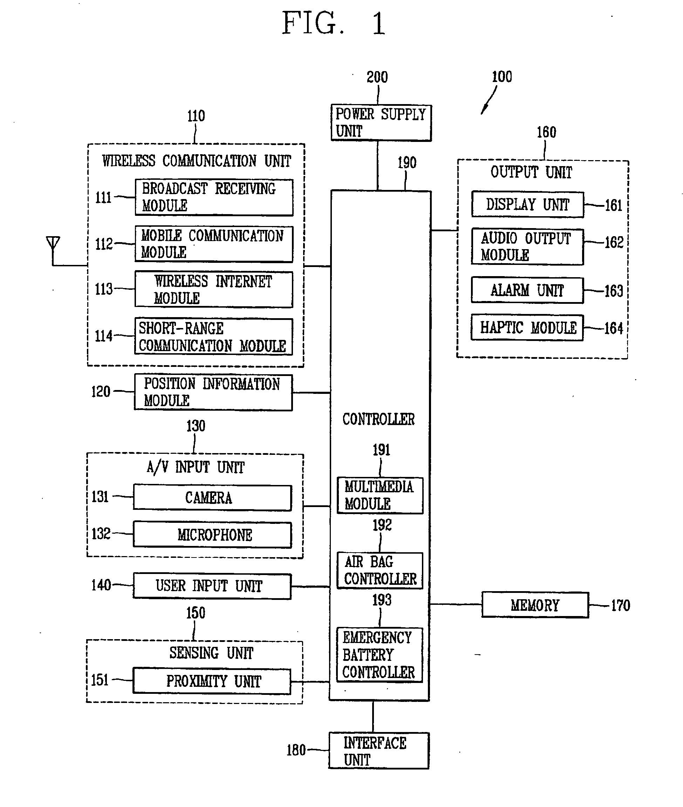

FIG. 1 is a block diagram showing a telematics terminal according to one embodiment of the present invention.

The telematic terminal 100 comprises a wireless communication unit 110, a position information module 120, an audio/video (A/V) input unit 130, a user input unit 140, a sensing unit 150, an output unit 160, a memory 170, an interface unit 180, a controller 190, a power supply unit 200, and so on. The telematics terminal may be composed of components more or less than the components of FIG. 1.

Hereinafter, the components will be explained in more detail.

The wireless communication unit 110 may include one or more modules configured to enable a wireless communication between the telematics terminal 100 and a wireless communications system, or between the telematics terminal 100 and a network where the telematics terminal 100 is located. For instance, the wireless communication unit 110 may include a broadcasting receiving module 111, a mobile communication module 112, a wireless Internet module 113, a short range communication module 114, and so on.

The broadcasting receiving module 111 is configured to receive broadcasting signals and/or broadcasting related information from an external broadcasting management server through broadcasting channels.

The broadcasting channels may include satellite channels and terrestrial wave channels. The broadcasting management server may indicate a server to generate and transmit broadcasting signals and/or broadcasting related information, or a server to receive previously generated broadcasting signals and/or broadcasting related information and to transmit to the telematics terminal 100. The broadcasting signals may include not only TV or radio broadcasting signals and data broadcasting signals, but also broadcasting signals implemented as data broadcasting signals are coupled to TV or radio broadcasting signals.

The broadcasting related information may indicate information relating to broadcasting channels, broadcasting programs or a broadcasting service provider. The broadcasting related information may be provided through a mobile communication network. In this case, the broadcasting related information may be received by the mobile communication module 112.

The broadcasting related information may be implemented in various forms, such as Electronic Program Guide (EPG) of Digital Multimedia Broadcasting (DMB), or Electronic Service Guide (ESG) of Digital Video Broadcast-Handheld (DVB-H).

The broadcasting receiving module 111 may receive digital broadcasting signals by using digital broadcasting systems such as Digital Multimedia Broadcasting-Terrestrial (DMB-T), Digital Multimedia Broadcasting-Satellite (DMB-S), Media Forward Link Only (MediaFLO), Digital Video Broadcast-Handheld (DBV-H), Integrated Services Digital Broadcast-Terrestrial (ISDB-T). Here, the broadcasting receiving module 111 may be configured to be adopted to not only the aforementioned digital broadcasting systems, but also any other broadcasting systems.

Broadcasting signals and/or broadcasting related information received through the broadcasting receiving module 111 may be stored in the memory 170.

The mobile communication module 112 transmits or receives wireless signals to/from at least one of a base station, an external terminal, and a server on a mobile communication network. The wireless signals may include voice call signals, video call signals, or various types of data according to transmission/reception of text/multimedia messages.

The wireless Internet module 113 indicates a module for wireless Internet access, and may be internally or externally mounted to the telematics terminal 100. Wireless Internet techniques may include Wireless LAN (Wi-Fi), Wireless Broadband (Wibro), World interoperability for Microwave Access (Wimax), High Speed Downlink Packet Access (HSDPA), and so on.

The short range communication module 114 indicates a module for short range communication. Short range communication techniques may include Bluetooth, Radio Frequency Identification (RFID), Infrared Data Association (IrDA), Ultra Wideband (UWB), ZigBee, and so on.

The position information module 120 indicates a module to obtain a position of the telematic terminal 100, and includes a Global Position System (GPS) as a representative example.

The GPS module receives signals including time information from at least three GPS satellites, thereby calculating a distance from each satellite. Then, the GPS module applies a triangulation method to the calculated distance, thereby obtaining position information. The GPS module further applies Map matching, Dead reckoning, etc. to position information obtained by the triangulation method, thereby enhancing precision of calculated position information.

The position information module 120 may obtain position information of the telematics terminal 100 by using not only the GPS module, but also various techniques such as Cell tower signals, wireless Internet signals, and a Bluetooth sensor. The techniques are referred to as 'Hybrid Positioning System'.

Referring to FIG. 1, the A/V input unit 130 serves to input audio or video signals, and may include a camera 131, a microphone 132, and so on. The camera 131 processes image frames such as still pictures or video obtained by an image sensor in a capturing mode. Then, the processed image frames may be displayed on the display unit 161.

The image frames processed by the camera 131 may be stored in the memory 170, or may be transmitted to outside through the wireless communication unit 110. The camera 131 may be implemented in two or more in number according to usage environments.

Further, the microphone 132 receives an external audio signal while the portable device is in a particular mode, such as a phone call mode, recording mode and voice recognition mode. The received audio signal is then processed and converted into digital data. Also, the microphone 132 may include assorted noise removing algorithms to remove noise generated in the course of receiving the external audio signal.

The user input unit 140 generates input data responsive to user's manipulations with respect to the telematics terminal. The user input unit 140 may be implemented as a key pad, a dome switch, a touchpad (e.g., static pressure/capacitance), a jog wheel and a jog switch. The user input unit 140 may be also implemented as a steering wheel, an acceleration pedal, a brake pedal, a gear shift of a vehicle, and so on.

The sensing unit 150 senses a current status of a vehicle or the telematics terminal 100, such as presence or absence of user contact with the telematics terminal 100, opening or closing of a vehicle door or window, whether or not a passenger has fastened a safety belt, manipulated statuses of a steering wheel, an acceleration pedal, a brake pedal, a gear shift, etc., a temperature inside or outside a vehicle, presence or absence of crash of a vehicle with an object, and a crash degree, a distance between a vehicle and an object, a status of components mounted to a vehicle, a lit status or brightness of a lamp mounted to inside or outside of a vehicle, and whether or not a passenger has been seated. Then, the sensing unit 150 generates a sensing signal to control an operation of the telematics terminal 100 or a vehicle. For instance, the sensing unit 150 may sense an opened status of a vehicle door, or a user's seated status by using a pressure applied to a seat. The sensing unit 150 may also sense whether power has been supplied from the power supply unit 200, or whether the interface unit 180 has been coupled to an external device or a vehicle component. The sensing unit 150 may include a proximity sensor 151.

The output unit 160 serves to generate video, audio, or tactile outputs, and may include the display unit 161, an audio output module 162, an alarm unit 163, a haptic module 164, etc.

The display unit 161 displays information processed by the telematics terminal 100. For instance, when the telematics terminal 100 is in a route guidance mode, the display unit 161 displays User Interface (UI) or Graphic User Interface (GUI) relating to the route guidance. However, when the telematics terminal 100 is in a video call mode or an image capturing mode, the display unit 161 displays captured or received images, or UI or GUI.

The display unit 161 may include at least one of a Liquid Crystal Display (LCD), a Thin Film Transistor-Liquid Crystal Display (TFT-LCD), an Organic Light-Emitting Diode (OLED), a Flexible Display, a 3D Display.

Some of the above displays may be configured as transparent or transmissive type of displays. These displays may be referred to as 'transparent displays', and include a Transparent OLED (TOLED) as a representative example.

The display unit 161 may be implemented as a Head Up Display (HUD). The display unit 161 may be mounted to a front glass of a vehicle, or a door window. Here, the display unit 161 may be implemented as a transparent or transmissive type.

The display unit 161 may be implemented in two or more in number according to a configured type of the telematics terminal 100.

When the display unit 161 and a sensor to sense a touch operation (hereinafter, will be referred to as 'touch sensor') have a structure to be layered with each other, the display unit 161 may serve as an input device as well as an output device. The touch sensor may be implemented as a touch film, a touch sheet, a touch pad, and so on.

The touch sensor may be configured to convert changes of a pressure applied to a specific portion of the display unit 161, or changes of a capacitance occurring from a specific portion of the display unit 161, into electric input signals. The touch sensor may be configured to sense not only a touch position and a touch area, but also a touch pressure.

Once touch inputs are sensed by the touch sensor, corresponding signals are transmitted to a touch controller. The touch controller processes the signals, and then transmits corresponding data to the controller 190. Accordingly, the controller 190 can sense a touch position on the display unit 161.

Referring to FIG. 1, the proximity sensor 151 may be arranged at an inner region of the telematics terminal covered by the touch screen, or near the touch screen. The proximity sensor indicates a sensor to sense presence or absence of an object approaching to a surface to be sensed, or an object disposed near a surface to be sensed, by using an electric field or infrared rays without a mechanical contact. The proximity sensor has a longer lifespan and a more enhanced utilization degree than a contact sensor.

The proximity sensor may include a transmissive type photoelectric sensor, a direct reflective type photoelectric sensor, a mirror reflective type photoelectric sensor, a high-frequency oscillation type proximity sensor, a capacitance type proximity sensor, a magnetic type proximity sensor, an infrared rays proximity sensor, and so on. When the touch screen is implemented as a capacitance type, proximity of a pointer to the touch screen is sensed by changes of an electric field. In this case, the touch screen (touch sensor) may be categorized into a proximity sensor.

Hereinafter, a status that the pointer is positioned to be proximate onto the touch screen without contact will be referred to as 'proximity touch', whereas a status that the pointer substantially comes in contact with the touch screen will be referred to as 'contact touch'. The pointer in a status of 'proximity touch' is positioned so as to be vertical with respect to the touch screen.

The proximity sensor senses proximity touch, and proximity touch patterns (e.g., distance, direction, speed, time, position, moving status, etc.). Information relating to the sensed proximity touch, and the sensed proximity touch patterns may be output onto the touch screen.

The audio output module 162 may output audio data received from the wireless communication unit 110 or stored in the memory 160, in a call-receiving mode, a call-placing mode, a recording mode, a voice recognition mode, a broadcast reception mode, a route guidance mode, and so on. The audio output module 152 may output audio signals relating to functions performed in the telematics terminal 100, e.g., call signal reception sound, message reception sound, route guidance voice, and so on. The audio output module 162 may include a receiver, a speaker, a buzzer, and so on.

The alarm unit 163 outputs signals notifying occurrence of events from the telematics terminal 100. The events occurring from the telematics terminal 100 may include call signal reception, message reception, touch input, problems of components mounted to a vehicle, abnormal opening or closing of a vehicle door, a window, etc., and so on. The alarm unit 163 may output not only video or audio signals, but also other types of signals such as signals notifying occurrence of events in a vibration manner. The video or audio signals may be output through the display unit 161 or the audio output module 162. Accordingly, the display unit 161 and the audio output module 162 may be categorized into some parts of the alarm unit 163.

The haptic module 164 generates various tactile effects. A representative example of the tactile effects generated by the haptic module 164 includes vibration. Vibration generated by the haptic module 164 may have a controllable intensity, a controllable pattern, and so on. For instance, different vibration may be output in a synthesized manner or in a sequential manner.

The haptic module 164 may generate various tactile effects including not only vibration, but also arrangement of pins vertically moving with respect to a skin surface contacting the haptic module 164, air injection force or air suction force through an injection hole or a suction hole, touch by a skin surface, presence or absence of contact with an electrode, effects by stimulus such as an electrostatic force, and reproduction of cold or hot feeling using a heat absorbing device or a heat emitting device.

The haptic module 164 may be configured to transmit tactile effects through a user's direct contact, or a user's muscular sense using a finger or a hand. The haptic module 164 may be implemented in two or more in number according to a configuration of the telematics terminal 100. The haptic module 164 may be provided at a portion to which a user frequently contacts. For instance, the haptic module 164 may be provided at a steering wheel, a gear shift, a seat, and so on.

The memory 170 may store programs to operate the controller 190, or may temporarily store input/output data (e.g., music, still images, moving images, map data, and so on). The memory 170 may store data relating to vibration and sound of various patterns output when touches are input onto the touch screen.

The memory 170 may be implemented using any type or combination of suitable memory or storage devices including a flash memory type, a hard disk type, a multimedia card micro type, a card type (SD or XD memory), random access memory (RAM), static random access memory (SRAM), electrically erasable programmable read-only memory (EEPROM), programmable read-only memory (PROM), read-only memory (ROM), magnetic memory, magnetic or optical disk, or other similar memory or data storage device. The telematics terminal 100 may operate on the Internet in association with a web storage that performs a storage function of the memory 170.

The interface unit 180 interfaces the telematics terminal 100 with all external devices connected to the telematics terminal 100. The interface 180 receives data or power from an external device, and transmits it to each component inside the telematics terminal 100. Otherwise, the interface 180 transmits data inside the telematics terminal 100 to an external device. The interface unit 180 may include a wire/wireless headset port, an external charger port, a wire/wireless data port, a memory card port, a port to connect a device having an identification module to the telematics terminal 100, an audio Input/Output (I/O) port, a video Input/Output (I/O) port, an earphone port, and so on.

The interface unit 180 may be implemented in the form of Controller-Area Network (CAN), Local Interconnect Network (LIN), FlexRay, Media Oriented Systems Transport (MOST), etc.

A recognition module is implemented as a chip to store each kind of information to identify an authorization right for the telematics terminal 100, and may include a User Identity Module (UIM), a Subscriber Identity Module (SIM), a Universal Subscriber Identity Module (USIM), and so on. A device having the recognition module (hereinafter, will be referred to as 'identification device') may be implemented as a smart card type. Accordingly, the identification device may be connected to the telematics terminal 100 through a port. The identification device may be also implemented as a vehicle key type.

The controller 190 control an overall operation of the telematics terminal 100. For instance, the controller 190 performs controls and processes relating to data communication, video call, route guidance, vehicle control, etc. The controller 190 may include a multimedia module 191 configured to play multimedia, an air bag controller 192 configured to control an air bag mounted to a vehicle, an emergency battery controller 193 configured to control an emergency battery mounted to a vehicle, and so on. The multimedia module 191, the air bag controller 192, and the emergency battery controller 193 may be implemented inside the controller 180, or may be separately implemented from the controller 190. The controller 190 may be referred to as 'Telematics Control Unit: TCU'.

The controller 190 may perform a pattern recognition process to recognize handwriting inputs or picture inputs on the touch screen, as texts or images, respectively.

The power supply unit 200 may be implemented as a battery mounted to a vehicle, or a battery independently mounted to the telematics terminal 100.

In addition, the above various embodiments may be implemented in a computer-readable medium using, for example, computer software, hardware, or some combination thereof.

For a hardware implementation, the embodiments described above may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. In some cases, such embodiments are implemented by the controller 190.

For a software implementation, the embodiments described herein may be implemented with separate software modules, such as procedures and functions, each of which perform one or more of the functions and operations described herein. The software codes can be implemented with a software application written in any suitable programming language and may be stored in a memory (for example, the memory 170), and executed by a controller or processor (for example, the controller 190).

The telematics terminal 100 may be integrally implemented with a vehicle, or may be separately implemented from a vehicle so as to be detachably mounted to the vehicle.

Hereinafter, the telematics terminal 100 according to one embodiment of the present invention will be explained in more detail.

A sensing means (not shown) senses abnormal events. And, the sensing means may include at least one of a crash sensor to sense crash of a vehicle with an object, a user input unit 140 to sense occurrence of abnormal events based on a passenger's input, a sensor to sense problems of components, a position information module, a wireless communication unit 110, a speed sensor, a door sensor, a microphone 132, a camera 131, and a temperature sensor.

The abnormal events may include at least one of crash of a vehicle with an object, problems of components mounted to a vehicle, falling of a vehicle, a third party's intrusion into a vehicle, a vehicle theft, and a passenger's physical abnormality.

The crash sensor is mounted to a front or rear surface of a vehicle, and senses a crash amount when the vehicle collides with an object, thereby to convert the crash amount into an electric signal.

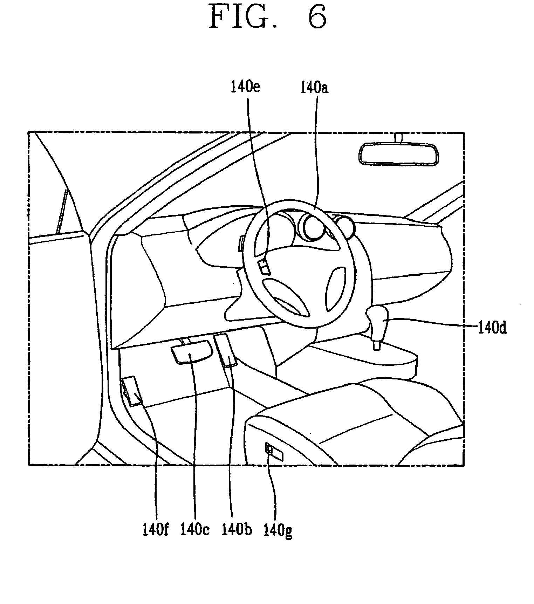

The user input unit 140 senses whether abnormal events have occurred or not based on a user's input. In the occurrence of abnormal events, a user may input the sensed occurrence of the abnormal events through the user input unit 140. The user input unit 140 may be composed of a key pad, a dome switch, a touch pad, a jog wheel, a jog switch, and so on provided inside or outside of a vehicle. Otherwise, the user input unit 140 may be composed of a steering wheel 140a, an acceleration pedal 140b, a brake pedal 140c, a gear shift 140d of FIG. 6.

A component sensor senses damages or problems of electric or mechanical components mounted in a vehicle. For instance, a pneumatic sensor mounted to a tire senses a tire pressure, and converts the sensed air pressure into an electric signal.

The position information module 120 senses a position of a vehicle and the telematics terminal 100 by using GPS techniques. The position information module 120 may sense at least one of altitude changes, speed changes, and position changes of a vehicle.

The wireless communication unit 110 senses whether or not abnormal events have occurred through communications with a wireless communication system or a telematics terminal mounted to another vehicle.

The speed sensor senses a speed of a vehicle, and converts the sensed speed into an electric signal. Rather than the speed sensor, the position information module 120 may sense a speed of a vehicle by using a position change amount of the vehicle according to lapses of time.

The door sensor senses an opened or closed status of a door, and converts the sensed status into an electric signal.

The camera 131 and the microphone 132 sense video or audio information inside or outside of the vehicle, and convert them into electric signals.

The temperature sensor senses an inner or outer temperature of a vehicle, a passenger's temperature, and so on.

The camera 131, the microphone 132, and the temperature sensor may sense a passenger's vital reaction.

For instance, the camera 131 may capture a passenger's pupils to sense size changes of the pupils, or may capture a passenger to sense presence of absence of bleeding. Also, the camera 131 may sense a respiration rate per minute by capturing a passenger's physical changes according to respiration. The microphone 132 may sense a respiration rate per minute and a heart rate per minute by sensing a passenger's voice changes or by sensing a passenger's respiration sound or pulse sound. Also, the temperature sensor may sense a passenger's body temperature.

As shown in FIG. 1, the controller 190 determines whether abnormal events have occurred by using the sensing means, and activates the camera in the occurrence of abnormal events. For instance, when the abnormal events correspond to crash of a vehicle with an object or falling of a vehicle, the controller 190 may determine the crash or falling by using at least one of a crash amount sensed by the crash sensor, a speed change amount sensed by the speed sensor, a position change amount sensed by the position information module 120, the camera 131, and the microphone 132. When determining crash of a vehicle with an object or falling of a vehicle by using the microphone 132, crash sounds sensed through the microphone 132 may be utilized.

When the abnormal events correspond to a third party's intrusion into a vehicle, the controller 190 may determine the third party's intrusion by using at least one of a user's input sensed by the user input unit 140, abnormal door manipulations sensed by the door sensor, a crash amount sensed by the crash sensor, the position information module 120, the camera 131, and the microphone 132. When sensing a third party's intrusion into a vehicle by using the position information module 120, it is determined that abnormal events have occurred in the case that a position of a vehicle sensed by the position information module 120 is within a preset crime-ridden district, or in the case that a vehicle stays in a crime-ridden district for a predetermined time.

When the abnormal events correspond to a passenger's physical abnormality, the controller 190 may determine the passenger's physical abnormality by using at least one of pupil size changes sensed by the camera 131, presence or absence of a passenger's bleeding, a passenger's voice changes sensed by the microphone 132, a respiration frequency per minute, a heart rate per minute, and a passenger's body temperature sensed by the temperature sensor.

When the abnormal events correspond to a vehicle theft, the controller 190 may determine the vehicle theft by using at least one of abnormal door manipulations sensed by the door sensor, a crash amount sensed by the crash sensor, the position information module 120, the camera 131, and the microphone 132.

According to another embodiment of the present invention, once abnormal events are sensed by the sensing unit, the controller 190 may activate the camera according to whether camera activating events have occurred or not.

The camera activating events include at least one of receiving a signal indicating image capturing by the camera from a server through the wireless communication unit 110, inputting a passenger's authorization for camera activation through the user input unit 140, and absence of sensing a passenger's input within a predetermined time through the user input unit, exceeding a preset value by a crash amount sensed by the crash sensor, exceeding a preset value by a speed of a vehicle before crash sensed by the speed sensor, absence of inputting a passenger's voice included in audio signals sensed through the microphone 132 within a predetermined time, sensing a third party's voice rather than a passenger's voice.

The abnormal events may include the camera activating events.

Otherwise, the abnormal events may be consistent with the camera activating events. When the abnormal events are consistent with the camera activating events, the controller 190 may automatically activate the camera in the occurrence of abnormal events.

As shown in FIG. 1, the camera 131 is selectively activated by the controller 190. The camera 131 is mounted to capture the interior or exterior of a vehicle, and converts visual information relating to abnormal events into an electric signal. For instance, the camera 131 may capture visual information such as an accident spot, a passenger's injured status, a description of a third party who has intruded into a vehicle, and so on.

The camera 131 may be activated in a spy mode. The spy mode indicates a mode where outputs of signals relating to a activating of the camera 131 are minimized so that a third party can not notice activation of the camera 131. For instance, it is possible to configure that noise from the camera 131 is minimized, a flash is not operated, or the camera 131 is not exposed out when operated.

As shown in FIG. 1, the wireless communication unit 110 may transmit images captured by the camera 131 to the server. The wireless communication unit 110 may transmit audio signals sensed by using the microphone 132 to the server. Also, the wireless communication unit 110 may receive a signal indicating a activating of the camera 131 from the server.

As shown in FIG. 1, in the occurrence of abnormal events, the microphone 132 may generate audio signals by sensing internal or external sound of a vehicle. Accordingly, audio information is firstly transmitted to the server than video information. According to the server's determination based on the audio information, whether to activate the camera or not is determined.

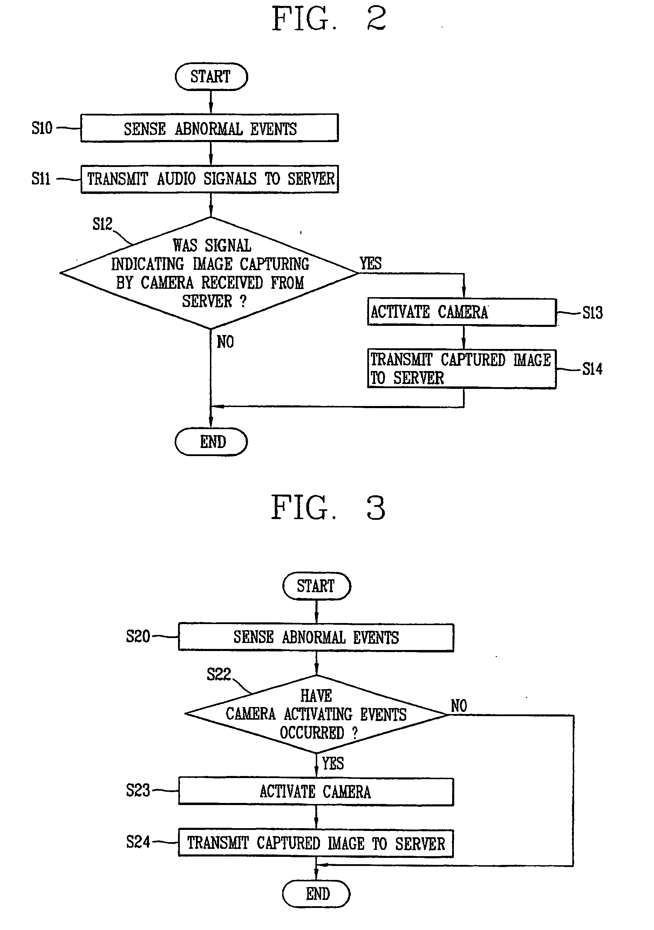

FIG. 2 is a flowchart showing a method for notifying emergency conditions by a telematics terminal according to one embodiment of the present invention.

As shown in FIG. 2, once abnormal events are sensed by the sensing means (S10), the controller 190 transmits an audio signal to the server through the wireless communication unit 110 (S11). The server determines, based on the received audio signal, whether visual information relating to the abnormal events is required or not. The server may be implemented as a call center, and so on.

When it is determined by the server that visual information relating to the abnormal events is required, a signal indicating image capturing by the camera 131 may be transmitted to the telematics terminal 100. The controller 190 may determine whether a signal indicating image capturing by the camera 131 has been received from the server (S12). If it is determined that a signal indicating image capturing by the camera 131 has been received, the controller 190 activates the camera 131 (S13). Images captured by the camera 131 are transmitted to the server through the wireless communication unit 110.

Based on the method for notifying emergency conditions by the telematics terminal 100, the server determines whether to perform image capturing by the camera in the occurrence of abnormal events. Then, the server may transmit instructions to the telematics terminal 100 based on a result of the determination.

FIG. 3 FIG. 3 is a flowchart showing a method for notifying emergency conditions by a telematics terminal according to another embodiment of the present invention.

As shown in FIG. 3, once abnormal events are sensed by the sensing means (S20), the controller 190 determines whether camera activating events have occurred (S22). The camera activating events may be included in the abnormal events. If it is determined that the camera activating events have occurred, the camera 131 is activated (S23). Images captured by the camera 131 are transmitted to the server through the wireless communication unit 110 (S24).

Even if it is determined that abnormal events have occurred based on a method for notifying emergency conditions by the telematics terminal 100, the camera 131 is not always activated, but is selectively activated only when preset camera activating events have occurred.

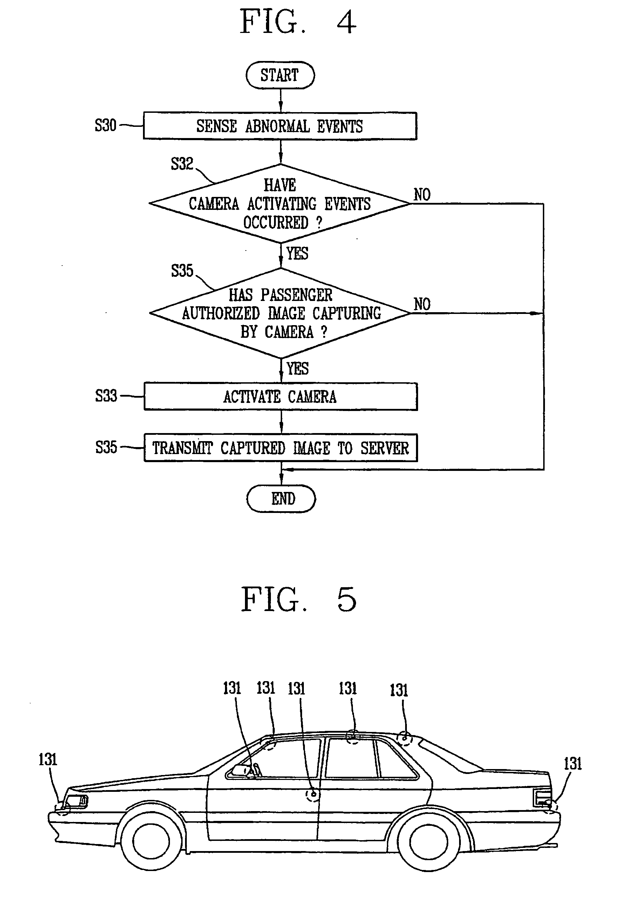

FIG. 4 is a flowchart showing a method for notifying emergency conditions by a telematics terminal according to still another embodiment of the present invention.

As shown in FIG. 4, once abnormal events are sensed by the sensing means (S30), the controller 190 determines whether camera activating events have occurred (S32). If it is determined that the camera activating events have occurred, the controller 190 determines whether a passenger has authorized image capturing by the camera (S35). If there is no authorization from the passenger, the camera 131 is not activated. On the contrary, if there is an authorization from the passenger, the camera 131 is activated (S33). Images captured by the camera 131 are transmitted to the server through the wireless communication unit 110 (S34).

Further provided is a step (S25) for determining whether a passenger has authorized image capturing by the camera 131 before activating the camera 131. If the passenger has authorized image capturing by the camera 131, his or her privacy can be more protected.

FIG. 5 is a view to explain a mounting position for the camera 131 of the telematics terminal 100.

Referring to FIG. 5, the camera 131 may be mounted to a front side or a rear side of a vehicle, or may be mounted to a side mirror so as to capture the exterior of the vehicle. The camera 131 may be also mounted to a rear mirror, a dash board, or a ceiling of a rear seat of the vehicle so as to capture the interior of the vehicle. The camera 131 may be mounted to the vehicle so as to be exposed out in a capturing mode, and so as not to be exposed out in a non-capturing mode. In a spy mode, the camera 131 may be configured not be exposed out at the time of capturing images.

FIG. 6 is a view to explain a mounting position for a user input unit.

The user input unit 140, a sensing means configured to sense abnormal events, may be mounted to the interior or exterior of a vehicle. In the case that the user input unit 140 is mounted to the interior of a vehicle, the user input unit 140 may be implemented as a button 140e on a steering wheel 140a, or a pedal 140f, or a button or lever 140g located on a side surface of a seat inside a vehicle. In the case that the user input unit 140 is implemented as the pedal 140f, when a third party has intruded into a vehicle, a user may input occurrence of an abnormal event or a camera activating event by manipulating the pedal 140f without being perceived by the intruder. The steering wheel 140a, the acceleration pedal 140b, the brake pedal 140c, the gear shift 140d, and so on may constitute the user input unit 140 according to manipulation methods.

For instance, it may be set that the acceleration pedal 140b and the brake pedal 140c are simultaneously manipulated in the occurrence of abnormal events or camera activating events.

In controlling a vehicle, it is rare to simultaneously manipulate the acceleration pedal 140b and the brake pedal 140c. Accordingly, if abnormal manipulations such as simultaneous manipulation of the acceleration pedal 140b and the brake pedal 140c are input, it is determined that abnormal events or camera activating events have occurred. As a result of the determination, the camera may be activated.

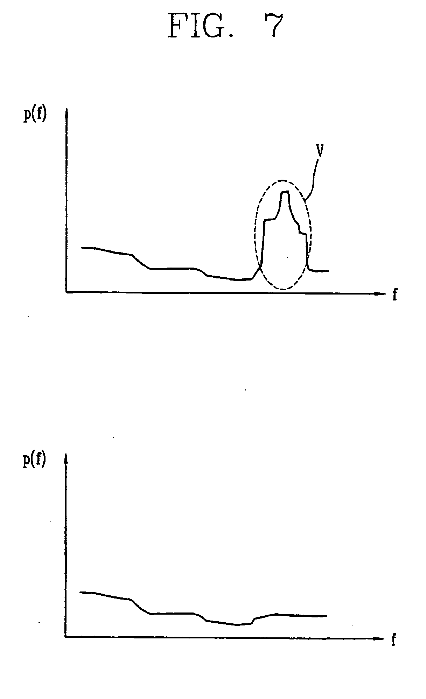

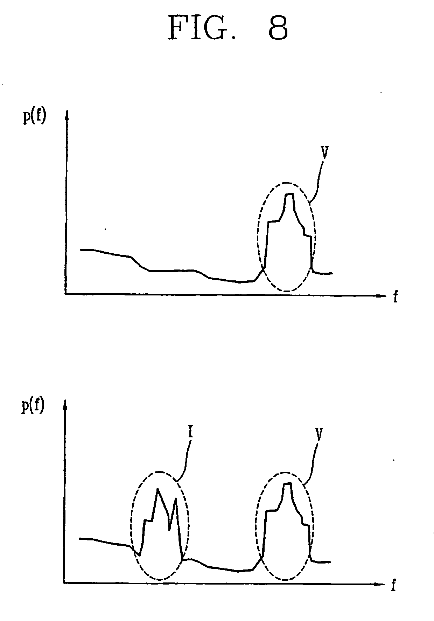

FIGS. 7 and 8 are views respectively showing a method for determining whether camera activating events have occurred based on audio signals sensed by the microphone 132.

The controller 190 may analyze a passenger's voice in a frequency region, and the analyzed result may be stored in the memory 170. When audio signals input through the microphone 132 are determined to match with a preset frequency band (V) of a passenger's voice, the controller 190 recognizes the audio signals input through the microphone 132 as a passenger's voice.

Referring to FIG. 7, when only signals less than a threshold value are sensed at a preset frequency band (V) of a passenger's voice after occurrence of abnormal events, the controller 190 may determine the sensing as camera activating events thereby to activate the camera 131. If a passenger's voice is not sensed within a predetermined time after occurrence of abnormal events, there is a high probability that the passenger has died or fainted.

As shown in FIG. 8, when signals more than a threshold value are sensed at a frequency band (I) rather than the preset frequency band (V) of a passenger's voice after occurrence of abnormal events, the controller 190 may determine the sensing as camera activating events thereby to activate the camera 131.

If a voice is sensed at a frequency band (I) rather than the preset frequency band (V) of a passenger's voice after occurrence of abnormal events, there is a high probability that a third party has intruded into a vehicle.

According to one embodiment of the present invention, the telematics terminal may be implemented as a program recorded medium in a code that can be read by a processor. The processor-readable medium may include read-only memory (ROM), random access memory (RAM), CD-ROM, a magnetic tape, a floppy disk, an optical data storage device, and so on. Also, the processor-readable medium may be implemented in the form of a carrier wave (e.g., transmission through Internet).

In the telematics terminal according to the present invention, when it is determined by the controller that emergency conditions have occurred, the camera is activated based on additional determinations, and images captured by the camera are transmitted to the server. Accordingly, visual information relating to emergency conditions can be efficiently transmitted to the server.

Furthermore, in the telematics terminal according to the present invention, the camera is selectively activated according to a user's input with respect to authorization for activation of the camera, and images captured by the camera are transmitted to the server. Accordingly, undesirable activating of the camera, or undesirable transmission of visual information may be prevented.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A method for notifying emergency conditions by a telematics terminal (100) in a vehicle, comprising:
sensing (S10; S20) an occurrence of an abnormal event;
transmitting (S10) audio signals received through a microphone (132) to the server in the occurrence of the abnormal event;
determining if audio signals input through the microphone (132) match with a preset frequency band (V) of a passenger's voice and recognizing the audio signals input through the microphone (132) as a passenger's voice;
determining (S12; S22; S32; S35) whether a camera activating event has occurred or not based on determining whether the audio signals input through the microphone (132) match with a preset frequency band (V) of a passenger's voice;
activating (S13; S23; S33) the camera (131) in the vehicle based on a result of the determination; and
transmitting (S14; S24; S35) images captured by the camera to a server.

2. The method of claim 1, wherein the camera activating event comprise at least one of reception of a signal indicating image capturing by the camera (131) from the server, no reception of normal event input within a predetermined time, and a passenger's authorization for image capturing by the camera (131).

3. The method of claim 1, wherein in the step of activating the camera, the camera is activated under a state that transmission of signals indicating activation of the camera (131) to outside is minimized

4. The method of claim 1, wherein the step of activating the camera (131) is performed when a user inputs a signal to authorize image capturing by the camera (131).

5. A telematics terminal (100) in a vehicle, comprising:
a camera (131);
a sensing means (150) configured to sense occurrence of an abnormal event;
a controller (190) configured to transmit audio signals received through a microphone (132) to a server in occurrence of an abnormal event, to determine if audio signals input through the microphone (132) match with a preset frequency band (V) of a passenger's voice, and to recognize the audio signals input through the microphone (132) as a passenger's voice;
to determine whether a camera activating event has occurred or not based on whether audio signals input through the microphone (132) match with a preset frequency band (V), to activate the camera (131) if a camera activating event has occurred;
a wireless communication unit (110) configured to transmit images captured by the camera (131) to a server.

6. The telematics terminal (100) according to claim 5, wherein the abnormal event comprise at least one of the following:
crash with an object;
problems of components mounted to a vehicle;
falling of a vehicle;
a third party's intrusion into a vehicle;
a vehicle theft;
and a passenger's physical abnormality.

7. The telematics terminal according to claim 5 or 6, wherein the sensing means (150) comprises at least one of the following:
a crash sensor to sense crash of a vehicle with an object;
a user input unit to sense occurrence of abnormal events based on a passenger's input;
a sensor to sense damages of components;
a position information module (120);
a wireless communication unit (110);
a speed sensor;
a door sensor;
the microphone (132);
the camera(131); and
a temperature sensor.

8. The telematics terminal (100) according to claims 5 to 7, the camera activating event comprises at least one of the following:
sensing abnormal manipulations for a vehicle door;
staying at a preset crime-ridden district for more than a predetermined time for a vehicle;
receiving a signal indicating image capturing by the camera(131) from the server;
absence of inputting a passenger's voice included in the received audio signals within a predetermined time;
sensing of a passenger's input through the user input unit (140) indicating authorization for image capturing by the camera;
absence of sensing a passenger's input through the user input unit (140) within a predetermined time;
sensing a third party's voice rather than a passenger's voice among the received audio signals;
exceeding a preset value of a crash amount sensed by the crash sensor when a vehicle collides with an object; and
exceeding a preset value of a speed of a vehicle sensed before crash with an object by a speed sensor.

9. The telematics terminal (100) according to g claims 5 to 8, wherein the microphone (132), the camera (131), and the temperature sensor sense a passenger's vital reaction, and the controller determines whether an abnormal event has occurred based on the sensed passenger's vital reaction.

10. The telematics terminal according to claims 5 to 9, wherein the camera (131) is activated under a state that transmission of signals indicating activation of the camera (131) to outside is minimized.

## Patentansprüche

1. Verfahren zum Mitteilen von Notfallbedingungen durch ein Telematikendgerät (100), das Folgendes umfasst:
Erfassen (S10, S20) eines Auftretens eines anomalen Ereignisses;
Übertragen (S10) von Audiosignalen, die über ein Mikrofon (132) empfangen werden, an den Server bei dem Auftreten des anomalen Ereignisses;
Bestimmen, ob die Audiosignale, die über das Mikrofon (132) eingegeben werden, mit einem voreingestellten Frequenzband (V) einer Fahrgaststimme übereinstimmen, und Erkennen von Audiosignalen, die über das Mikrofon (132) eingegeben werden, als eine Fahrgaststimme;
Bestimmen (S12, S22, S32, S35), ob ein kameraaktivierendes Ereignis aufgetreten ist oder nicht, basierend auf dem Bestimmen, ob die Audiosignale, die über das Mikrofon (132) eingegeben werden, mit einem voreingestellten Frequenzband (V) einer Fahrgaststimme übereinstimmen;
Aktivieren (S13, S23, S33) der Kamera (131) in dem Fahrzeug basierend auf dem Ergebnis der Bestimmung; und
Übertragen (S14, S24, S35) von Bildern, die von der Kamera aufgenommen werden, an einen Server.

2. Verfahren nach Anspruch 1, wobei das kameraaktivierende Ereignis einen Empfang eines Signals, das eine Bildaufnahme durch die Kamera (131) angibt, von dem Server und/oder keinen Empfang der Normalereigniseingabe innerhalb einer vorbestimmten Zeitspanne und/oder eine Fahrgastautorisierung für die Bildaufnahme durch die Kamera (131) umfasst.

3. Verfahren nach Anspruch 1, wobei in dem Schritt des Aktivierens der Kamera die Kamera in einem Zustand aktiviert wird, in dem eine Übertragung von Signalen, die die Aktivierung der Kamera (131) angeben, nach außen minimiert ist.

4. Verfahren nach Anspruch 1, wobei der Schritt des Aktivierens der Kamera (131) durchgeführt wird, wenn ein Anwender ein Signal eingibt, um die Bildaufnahme durch die Kamera (131) zu autorisieren.

5. Telematikendgerät (100) in einem Fahrzeug, das Folgendes umfasst:
eine Kamera (131);
Erfassungsmittel (150), die dazu ausgelegt sind, ein Auftreten eines anomalen Ereignisses zu erfassen;
einen Controller (190), der dazu ausgelegt ist, Audiosignale, die über ein Mikrofon (132) empfangen werden, bei dem Auftreten des anomalen Ereignisses an den Server zu übertragen, zu bestimmen, ob die Audiosignale, die über das Mikrofon (132) eingegeben werden, mit einem voreingestellten Frequenzband (V) einer Fahrgaststimme übereinstimmen, und Audiosignale, die über das Mikrofon (132) eingegeben werden, als eine Fahrgaststimme zu erkennen;
basierend darauf, ob die Audiosignale, die über das Mikrofon (132) eingegeben werden, mit einem voreingestellten Frequenzband (V) einer Fahrgaststimme übereinstimmen, zu bestimmen, ob ein kameraaktivierendes Ereignis aufgetreten ist oder nicht; die Kamera (131) dann zu aktivieren, wenn ein kameraktivierendes Ereignis aufgetreten ist;
eine drahtlose Kommunikationseinheit (110), die dazu ausgelegt ist, Bilder, die von der Kamera (131) aufgenommen werden, an einen Server zu übertragen.

6. Telematikendgerät (100) nach Anspruch 5, wobei das anomale Ereignis mindestens eines der folgenden Ereignisse umfasst:
einen Zusammenstoß mit einem Objekt;
Probleme der Komponenten, die an einem Fahrzeug montiert sind;
ein Fallen eines Fahrzeugs;
ein Eindringen eines Dritten in ein Fahrzeug;
einen Fahrzeugdiebstahl;
und eine körperliche Unregelmäßigkeit eines Fahrgasts.

7. Telematikendgerät nach Anspruch 5 oder 6, wobei die Erfassungsmittel (150) mindestens eines der folgenden Mittel umfassen:
einen Zusammenstoßsensor, um einen Zusammenstoß eines Fahrzeugs mit einem Objekt zu erfassen;
eine Anwendereingabeeinheit, um ein Auftreten von anomalen Ereignissen basierend auf einer Fahrgasteingabe zu erfassen;
einen Sensor, um Schäden an Komponenten zu erfassen;
ein Positionsinformationsmodul (120);
eine drahtlose Kommunikationseinheit (110);
einen Geschwindigkeitssensor;
einen Türsensor;
ein Mikrofon (132);
eine Kamera (131); und
einen Temperatursensor.

8. Telematikendgerät (100) nach einem der Ansprüche 5 bis 7, wobei das kameraaktivierende Ereignis mindestens einer der folgenden Ereignisse umfasst:
Erfassen von anomalen Manipulationen an einer Fahrzeugtür;
Aufenthalt in einem voreingestellten von Kriminalität geplagten Stadtteil für länger als eine vorbestimmte Zeit für ein Fahrzeug;
Empfangen eines Signals, das die Bildaufnahme durch die Kamera (131) angibt, von dem Server;
Ausbleiben des Eingebens einer Fahrgaststimme, die in den empfangenen Audiosignalen enthalten ist, innerhalb einer vorbestimmten Zeitspanne;
Erfassen einer Fahrgasteingabe über die Anwendereingabeeinheit (140), die eine Autorisierung für die Bildaufnahme durch die Kamera angibt;
Ausbleiben des Erfassens einer Fahrgasteingabe über die Anwendereingabeeinheit (140) innerhalb einer vorbestimmten Zeitspanne;
Erfassen einer Stimme eines Dritten anstelle einer Fahrgaststimme unter den empfangenen Audiosignalen;
Überschreiten eines voreingestellten Werts eines Zusammenstoßbetrags, der durch den Zusammenstoßsensor erfasst wird, wenn ein Fahrzeug mit einem Objekt kollidiert; und
Überschreiten eines voreingestellten Wertes einer Geschwindigkeit eines Fahrzeugs, die vor einem Zusammenstoß mit einem Objekt durch einen Geschwindigkeitssensor erfasst wird.

9. Telematikendgerät (100) nach einem der Ansprüche 5 bis 8, wobei das Mikrofon (132), die Kamera (131) und der Temperatursensor Fahrgastlebenszeichen erfassen und der Controller basierend auf den erfassten Fahrgastlebenszeichen bestimmt, ob ein anomales Ereignis aufgetreten ist.

10. Telematikendgerät nach einem der Ansprüche 5 bis 9, wobei die Kamera (131) in einem Zustand aktiviert wird, in dem eine Übertragung von Signalen, die die Aktivierung der Kamera (131) angeben, nach außen minimiert ist.

## Revendications

1. Procédé de notification de conditions d'urgence par un terminal télématique (100) dans un véhicule, comprenant :
la détection (S10 ; S20) d'une survenance d'un événement anormal ;
la transmission (S10) de signaux audio reçus par l'intermédiaire d'un microphone (132) au serveur à la survenance de l'événement anormal ;
la détermination si des signaux audio entrés par l'intermédiaire du microphone (132) correspondent à une bande de fréquences préréglée (V) de la voix d'un passager et la reconnaissance des signaux audio entrés par l'intermédiaire du microphone (132) en tant que la voix d'un passager ;
la détermination (S12 ; S22 ; S32 ; S35) si un événement d'activation de caméra est survenu ou pas sur la base de la détermination si les signaux audio entrés par l'intermédiaire du microphone (132) correspondent à une bande de fréquences préréglée (V) de la voix d'un passager ;
l'activation (S13 ; S23 ; S33) de la caméra (131) dans le véhicule sur la base d'un résultat de la détermination ; et
la transmission (S14 ; S24 ; S35) d'images acquises par la caméra à un serveur.

2. Procédé selon la revendication 1, dans lequel l'événement d'activation de caméra comprend au moins l'une d'une réception d'un signal indiquant l'acquisition d'image par la caméra (131) en provenance du serveur, la non-réception d'une entrée d'événement normal au cours d'un temps prédéterminé, et une autorisation d'un passager pour l'acquisition d'image par la caméra (131).

3. Procédé selon la revendication 1, dans lequel, à l'étape de l'activation de la caméra, la caméra est activée dans un état dans lequel une transmission de signaux indiquant l'activation de la caméra (131) à l'extérieur est minimisée.

4. Procédé selon la revendication 1, dans lequel l'étape de l'activation de la caméra (131) est effectuée lorsqu'un utilisateur entre un signal pour autoriser l'acquisition d'image par la caméra (131).

5. Terminal télématique (100) dans un véhicule, comprenant :
une caméra (131) ;
un moyen de détection (150) configuré pour effectuer la détection d'une survenance d'un événement anormal ;
un organe de commande (190) configuré pour effectuer la transmission de signaux audio reçus par l'intermédiaire d'un microphone (132) à un serveur à la survenance d'un événement anormal, la détermination si des signaux audio entrés par l'intermédiaire du microphone (132) correspondent à une bande de fréquences préréglée (V) de la voix d'un passager et la reconnaissance des signaux audio entrés par l'intermédiaire du microphone (132) en tant que la voix d'un passager ;
la détermination si un événement d'activation de caméra est survenu ou pas sur la base de la détermination si les signaux audio entrés par l'intermédiaire du microphone (132) correspondent à une bande de fréquences préréglée (V), l'activation de la caméra (131) si un événement d'activation de caméra est survenu ;
une unité de communication sans fil (110) configurée pour effectuer la transmission d'images acquises par la caméra (131) à un serveur.

6. Terminal télématique (100) selon la revendication 5, dans lequel l'événement anormal comprend au moins l'un de :
une collision avec un objet ;
des problèmes de composants montés dans un véhicule ;
la chute d'un véhicule ;
l'intrusion d'un tiers dans un véhicule ;
un vol de véhicule ;
et une anomalie physique d'un passager.

7. Terminal télématique (100) selon la revendication 5 ou 6, dans lequel le moyen de détection (150) comprend au moins l'un de :
un capteur de collision pour détecter une collision d'un véhicule avec un objet ;
une unité d'entrée d'utilisateur pour détecter la survenance d'événements anormaux sur la base d'une entrée d'un passager ;
un capteur pour détecter des détériorations de composants ;
un module d'informations de position (120) ;
un module de communication sans fil (110) ;
un capteur de vitesse ;
un capteur de portière ;
le microphone (132) ;
la caméra (131) ; et
un capteur de température.

8. Terminal télématique (100) selon les revendications 5 à 7, l'événement d'activation de caméra comprenant au moins l'un de :
la détection de manipulations anormales d'une portière de véhicule ;
le maintien d'un véhicule dans une zone prédéterminée à forte criminalité au-delà d'un temps prédéterminé ;
la réception d'un signal indiquant l'acquisition d'image par la caméra (131) en provenance du serveur ;
l'absence d'entrée de la voix d'un passager incluse dans les signaux audio reçus au cours d'un temps prédéterminé ;
la détection d'une entrée d'un passager par l'intermédiaire de l'unité d'entrée d'utilisateur (140) indiquant l'autorisation d'acquisition d'image par la caméra ;
l'absence de détection d'une entrée d'un passager par l'intermédiaire de l'unité d'entrée d'utilisateur (140) au cours d'un temps prédéterminé ;
la détection de la voix d'un tiers au lieu de la voix d'un passager parmi les signaux audio reçus ;
le dépassement d'une valeur préréglée d'une quantité de collision détectée par le capteur de collision lorsqu'un véhicule entre en collision avec un objet; et
le dépassement d'une valeur préréglée d'une vitesse d'un véhicule détectée avant une collision avec un objet par un capteur de vitesse.

9. Terminal télématique (100) selon les revendications 5 à 8, dans lequel le microphone (132), la caméra (131), et le capteur de température détectent la réaction vitale d'un passager, et l'organe de commande détermine si un événement anormal est survenu sur la base de la réaction vitale détectée du passager.

10. Terminal télématique selon les revendications 5 à 9, dans lequel la caméra (131) est activée dans un état dans lequel une transmission de signaux indiquant l'activation de la caméra (131) à l'extérieur est minimisée.
